# EUROPÄISCHE PATENTSCHRIFT

(11) **EP 2 526 320 B1**
(45) Veröffentlichungstag und Bekanntmachung des Hinweises auf die Patenterteilung: **15.05.2019**
(21) Anmeldenummer: 11700267.5
(22) Anmeldetag: 13.01.2011
(51) Int. Cl.: F16H 1/28, F16H 57/08

(54) **LAGERDECKEL MIT LAGERFUNKTION**
BEARING COVER HAVING A BEARING FUNCTION
CHAPEAU DE PALIER À FONCTION DE PALIER

(30) Priorität: 14.07.2010 DE 102010031340; 19.01.2010 DE 102010000988
(43) Veröffentlichungstag der Anmeldung: 28.11.2012
(73) Patentinhaber: Robert Bosch GmbH, 70442 Stuttgart (DE)
(72) Erfinder: OBERLE, Hans-Juergen, 76437 Rastatt (DE); SCHWENDEMANN, Franz, 77833 Ottersweier (DE)
(86) Internationale Anmeldenummer: PCT/EP2011/050374
(87) Internationale Veröffentlichungsnummer: WO 2011/089055

(56) Entgegenhaltungen:
- CN-Y- 201 134 724
- DE-C1- 19 711 423
- JP-A- 4 331 848
- JP-A- 2003 130 143
- JP-U- 56 007 144
- US-A- 2 932 992
- US-A- 5 012 693
- US-A- 5 240 462
- US-A1- 2003 220 169

## Beschreibung

### Stand der Technik

Die vorliegende Erfindung betrifft einen Verstellantrieb mit einem Getriebe.

Zum Verstellen von Komponenten, beispielsweise einer Heckklappe eines Fahrzeugs, eines Schiebedachs oder insbesondere zur Höhenverstellung oder Neigungsverstellung eines Sitzes, werden häufig Verstellantriebe benötigt, die eine hohe Untersetzung aufweisen und ein hohes Drehmoment übertragen. Häufig werden hierfür Planetengetriebe verwendet, wobei oftmals mehrere Getriebestufen nacheinander angeordnet werden.

Stirnseitig werden solche Verstellantriebe mit einem Lagerdeckel verschlossen. Zum Lagern von Getriebebauteilen insbesondere der letzten Getriebestufe werden am Lagerdeckel herkömmlich Lagerbauteile angeordnet, die aus einem Material mit geeigneten Lagereigenschaften hergestellt sind.

Um die Lagerhaltung und die Produktionskosten möglichst gering zu halten, ist es für solche Verstellantriebe zum Einen wichtig, die Anzahl der Bauteile klein zu halten. Weiterhin soll das aufgrund von fertigungsbedingten Toleranzen zu berücksichtigende Spiel möglichst gering sein.

Mit der US5012693 ist ein Verstellantrieb für einen Außenspiegel bekannt geworden, bei dem im innern eines Gehäusesedeckels eine Verzahnung angeformt ist, die mit den Planetenrädern eines Planetengetriebes kämmen.

JP 2003 130143, US 5 012 693, US 5 240 462, DE 19711423, JP 4 331848, US 2003/220169, JP 56007144 U, beschreiben weitere Verstellantriebe.

### Offenbarung der Erfindung

Aufgabe der Erfindung ist es, einen Verstellantrieb zum Antrieb einer Komponente, insbesondere eines Fahrzeugs, zu schaffen, der im Vergleich zu herkömmlichen Verstellantrieben ein verringertes Spiel und somit eine höhere Güte, insbesondere hinsichtlich des Radialversatzes, aufweist, der sehr flexibel an verschiedene Anforderungen anpassbar ist, der sehr leicht ist, und der außerdem sehr kostengünstig herstellbar und leicht montierbar ist.

Die Aufgabe wird gelöst mit einem Verstellantrieb gemäss Anspruch 1.

Erfindungsgemäß weist der Lagerdeckel die erste Lagerfläche auf, so dass die Lagerfläche einteilig mit dem Lagerdeckel hergestellt ist. Funktionsrelevante Toleranzen werden daher bereits im Herstellungsprozess berücksichtigt. Der erfindungsgemäße Lagerdeckel ist daher mit sehr engen Toleranzen herstellbar. Es ist keine Nacharbeit erforderlich und die Güte der Lagerung ist hinsichtlich des an den Lagerflächen auftretenden Versatzes sehr hoch. Außerdem treten aufgrund der einstückigen Herstellung des Lagerdeckels im Vergleich zur Verwendung eines herkömmlichen Lagerdeckels mit einem oder mehreren zusätzlichen Lagerbauteilen keine Toleranzketten durch Montage und zu berücksichtigende Toleranzen auf.

Erfindungsgemäss umfasst der Lagerdeckel weiterhin zumindest ein Getriebebauteil, welches in den Lagerdeckel integriert ist, so dass die Bauteilezahl des Getriebes um das Getriebebauteil reduziert ist. Erfindungsgemäss
ist das Getriebebauteil ein Zahnrad mit einer Verzahnung, wobei der Lagerdeckel das Zahnrad mit der Verzahnung oder nur die Verzahnung umfasst. Die Verzahnung ist eine Innen- oder eine Außenverzahnung. Sie erstreckt sich entweder

axial und daher im Wesentlichen parallel der Drehachse, oder sie weist einen Winkel zur Drehachse auf, insbesondere einen rechten Winkel. Gegenüber einer Ausführungsform eines Getriebes, in dem das Getriebebauteil separat gefertigt und montiert wird, sind sowohl bei der Ausführungsform, in der ein Zahnrad im Lagerdeckel integriert ist, als auch bei der Ausführungsform, in der nur eine Verzahnung in den Lagerdeckel integriert ist, die Toleranzketten reduziert und die Güte des Getriebes ist verbessert, wodurch insbesondere das Laufgeräusch des Getriebes verringert ist. Außerdem ist der Montageaufwand im Vergleich zur herkömmlichen Fertigung aus separaten Teilen reduziert. Weiterhin beansprucht ein Getriebe mit erfindungsgemäßem Lagerdeckel weniger Bauraum.

Erfindungsgemäss weist der Lagerdeckel eine zweite Lagerfläche auf, wobei die erste Lagerfläche und die zweite Lagerfläche zur Aufnahme von Radialkräften vorgesehen sind, so dass der Radialversatz der Lagerung an der ersten und zweiten Lagerfläche gering ist. Erfindungsgemäss weist der Lagerdeckel außerdem eine dritte Lagerfläche zur Aufnahme von Axialkräften auf. Die dritte Lagerfläche ermöglicht in Kombination mit einer für die Aufnahme von Radialkräften vorgesehenen Lagerfläche insbesondere die Lagerung von schräg verzahnten Getriebebauteilen, beispielsweise bei Verwendung eines schräg verzahnten Planetengetriebes. Bevorzugt sind die Anzahl und die jeweilige Funktion der Lagerflächen des Lagerdeckels nicht auf die drei genannten Lagerflächen beschränkt.

In dieser Ausführungsform ist der Lagerdeckel mit sehr engen Toleranzen herstellbar. Außerdem ist der Werkzeugaufwand minimiert. Die Fertigung des Grundkörpers des Lagerdeckels aus einem Kunststoff hat
den Vorteil, dass der Lagerdeckel gegenüber einem metallenen Lagerdeckel ein geringeres Gewicht aufweist und bezüglich seiner Formgebung flexibler anpassbar ist. Außerdem ist er auch als Kunststoffbauteil sehr kostengünstig herstellbar, beispielsweise in einem Spritzgießprozess.

Erfindungsgemäss umfasst der Lagerdeckel einen Grundkörper, der aus einem ersten Werkstoff gefertigt ist, wobei die zweite und dritte Lagerfläche jeweils aus demselben oder einem anderen Werkstoff gefertigt sind. Da die erste Lagerfläche erfindungsgemäß einstückig mit dem Lagerdeckel gebildet ist, bildet sie einen Teil des Grundkörpers.

Es ist bevorzugt, dass der Grundkörper aus einem Kunststoff und zumindest das Zahnrad aus einem Metall gefertigt sind, da das Zahnrad als am stärksten belasteter Bereich des Lagerdeckels in dieser Ausführungsform aus einem hochfesten Werkstoff gefertigt ist. Er ist beispielsweise in den Grundkörper des Lagerdeckels einspritzbar oder einpressbar. Andererseits sind für die erste einstückig mit dem Lagerdeckel gebildete Lagerfläche und gegebenenfalls für weitere aus einem Kunststoff gebildete Lagerflächen die kunststoffspezifischen Lagereigenschaften nutzbar.

Zur Aufnahme von aus dem Verzahnungseingriff des Getriebes resultierenden Drehmomenten umfasst der Lagerdeckel bevorzugt zumindest ein Formschlussmittel, welches das Zahnrad gegen den Grundkörper abstützt. Das Formschlussmittel ist beispielsweise eine am Zahnrad und/oder dem Grundkörper angeordnete und insbesondere umlaufende Verzahnung, oder es sind zwischen dem Zahnrad und dem Grundkörper ein oder mehrere einen Formschluss bildende Bauteile, zum Beispiel Stifte, vorgesehen. Dadurch kann das über die Verzahnung übertragene Drehmoment auch über den weniger festen aber leicht bauenden Kunststoff ausreichend abgestützt werden. Andererseits ermöglicht diese Ausführungsform, dass das Volumen des hochfesten Werkstoffs, aus dem das Zahnrad gebildet ist, auf die herstellungsbedingten Anforderungen, wie beispielsweise Mindestwandstärken, reduzierbar ist.

Weiterhin bevorzugt weist das Material des Lagerdeckels gute Lagereigenschaften auf. Ebenfalls bevorzugt sind zumindest die Lagerflächen des Lagerdeckels, besonders bevorzugt der gesamte Lagerdeckel, mit einem Schmierstoff getränkt, so dass die an den Lagerflächen auftretende Reibung reduziert ist und/oder der Schmierstoff einen Korrosionsschutz bildet.

Ebenfalls bevorzugt umfasst der Lagerdeckel ein oder mehrere weitere Funktionsbauteile, insbesondere einen Sensor, beispielsweise einen Drehrichtungssensor oder einen Drehzahlsensor. Das Funktionsbauteil ist entweder in den Lagerdeckel integriert oder an diesen angebaut, beispielsweise mittels Schnapphaken. In dieser Ausführungsform weist der Lagerdeckel bevorzugt einen aus einem Kunststoff gefertigten Grundkörper auf, um die große Flexibilität in der Formgebung zu nutzen.

Bevorzugt ist das Getriebe ein Planetengetriebe. Besonders bevorzugt ist das Getriebe ein einseitig gelagertes Planetengetriebe. In Abhängigkeit von der benötigten Untersetzung des Verstellantriebs und dem zu übertragenden Drehmoment sind aber auch andere Getriebe verwendbar.

Der Planetenträger ist vorzugsweise um eine Drehachse drehbar.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt schematisch einen Heckklappenantrieb gemäß dem Stand der Technik,
- **Fig. 2**: zeigt den Lagerdeckel des Heckklappenantriebs der **Fig. 1** mit einem ersten und einem zweiten Lagerbauteil,
- **Fig. 3**: zeigt einen Lagerdeckel,
- **Fig. 4**: zeigt in den **Fig. 4 (a)** und **Fig. 4 (b)** weitere Ausführungsformen von Lagerdeckeln,
- **Fig. 5**: zeigt eine weitere Ausführungsform eines Lagerdeckels, wobei ein Planetenträger im Lagerdeckel angeordnet ist, und wobei die **Fig. 5 (a)** den Lagerdeckel in einer Seitenansicht und **Fig. 5 (b)** den Lagerdeckel in einer Innenansicht zeigt, und
- **Fig. 6**: zeigt eine weitere Ausführungsform eines erfindungsgemäßen Lagerdeckel s, wobei die **Fig. 6 (a)** den Lagerdeckel in einer Innenansicht, die **Fig. 6 (b)** den Lagerdeckel in einer Seitenansicht, und **Fig. 6 (c)** den Lagerdeckel in einer Draufsicht zeigt.

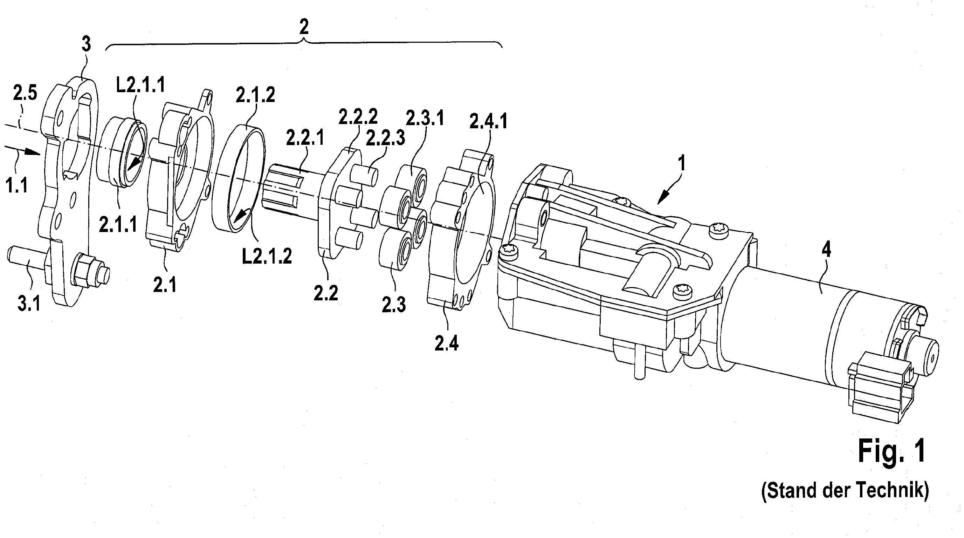

**Fig. 1** zeigt schematisch einen Heckklappenantrieb 1 eines Fahrzeugs gemäß dem Stand der Technik. Der Heckklappenantrieb 1 weist mehrere Getriebestufen (nicht dargestellt) auf, wobei das letzte Getriebe 2 ein Planetengetriebe ist. Das letzte Getriebe 2 des Heckklappenantriebs 1 ist in der **Fig. 1** explosionsartig gezeigt. Im Folgenden werden die Begriffe Getriebe 2 und Planetengetriebe synonym verwendet.

Zum Antrieb des Heckklappenantriebs 1 ist ein Elektromotor 4 vorgesehen. Weiterhin zeigt die **Fig. 1** ein Befestigungsblech 3 mit einem Bolzen 3.1, das die Schnittstelle zur Heckklappe (nicht dargestellt) bildet.

Das Planetengetriebe 2 umfasst einen Planetenträger 2.2, der um eine Drehachse 2.5 drehbar ist. Am Planetenträger 2.2 sind hier beispielhaft vier Lagerbolzen 2.2.3 vorgesehen, an denen jeweils ein Planetenrad 2.3 drehbar angeordnet ist. Das Planetengetriebe 2 umfasst weiterhin ein Sonnenrad (nicht sichtbar), dass koaxial zur Drehachse 2.5 angeordnet ist und sich bei Antrieb des Elektromotors 1 dreht. Das Sonnenrad weist eine Verzahnung (nicht sichtbar) auf, die mit einer Außenverzahnung 2.3.1 der Planetenräder 2.3 in Eingriff ist. Im Rahmen der **Fig. 1** sind die Verzahnungen der Übersichtlichkeit halber lediglich als glatte Flächen dargestellt. Beim Drehen des Sonnenrades rollen sich die Außenverzahnungen 2.3.1 der Planetenräder 2.3 an einer Innenverzahnung 2.4.1 eines Hohlrades 2.4 ab. Dabei wird der Planetenträger 2.2 um die Drehachse 2.5 gedreht.

Der Planetenträger 2.2 weist eine erste Lagergegenfläche 2.2.1 auf, die sich an einer ersten Lagerfläche L2.1.1 eines ersten Lagerbauteils 2.1.1 abstützt. Weiterhin weist der Planetenträger 2.2 eine zweite Lagergegenfläche 2.2.2 auf, die sich an einer zweiten Lagerfläche L2.1.2 eines zweiten Lagerbauteils 2.1.2 abstützt. Dabei sind das erste Lagerbauteil 2.1.1 sowie das zweite Lagerbauteil 2.1.2 an einem Lagerdeckel 2.1 angeordnet, wobei der Lagerdeckel 2.1 zum stirnseitigen Verschließen des Heckklappenantriebs 1 vorgesehen ist. Die Stirnseite des Heckklappenantriebs 1 ist durch einen Pfeil 1.1 gezeigt.

Das Befestigungsblech 3 ist drehfest am Lagerdeckel 2.1 befestigbar.

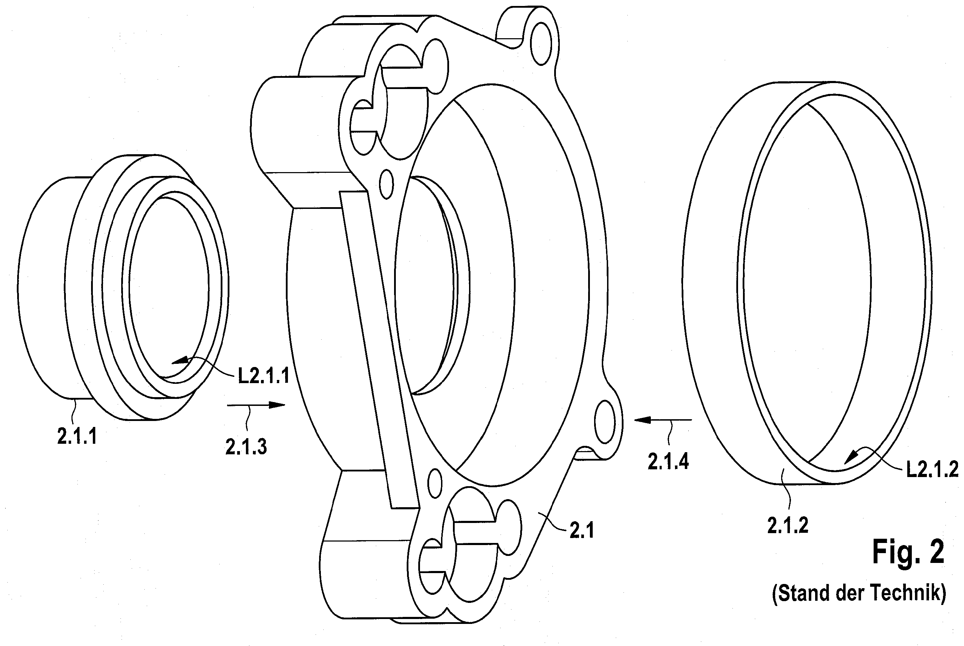

Ein Heckklappenantrieb 1 gemäß dem Stand der Technik sieht neben dem Lagerdeckel 2.1 daher ein erstes Lagerbauteil 2.1.1 sowie ein zweites Lagerbauteil 2.1.2 zum Lagern des Planetenträgers 2.2 vor. Das erste und das zweite Lagerbauteil 2.1.1, 2.1.2 sind dabei insbesondere durch einen Presssitz mit dem Lagerdeckel 2.1 verbunden. Die **Fig. 2** zeigt den Lagerdeckel 2.1 sowie das erste und das zweite Lagerbauteil 2.1.1, 2.1.2 in einer vergrößerten Darstellung. Die Pfeile 2.1.3 sowie 2.1.4 zeigen die Einbaurichtung des ersten Lagerbauteils 2.1.1 sowie des zweiten Lagerbauteils 2.1.2 an den Lagerdeckel 2.1.

Herkömmlich erfordert die Lagerung des Planetenträgers 2.2 daher drei ineinander zu montierende Bauteile, nämlich den Lagerdeckel 2.1 sowie das erste und das zweite Lagerbauteil 2.1.1, 2.1.2, wobei bei der Montage funktionsrelevante Fertigungstoleranzen zu berücksichtigen sind, die gegebenenfalls eine Nacharbeit erfordern.

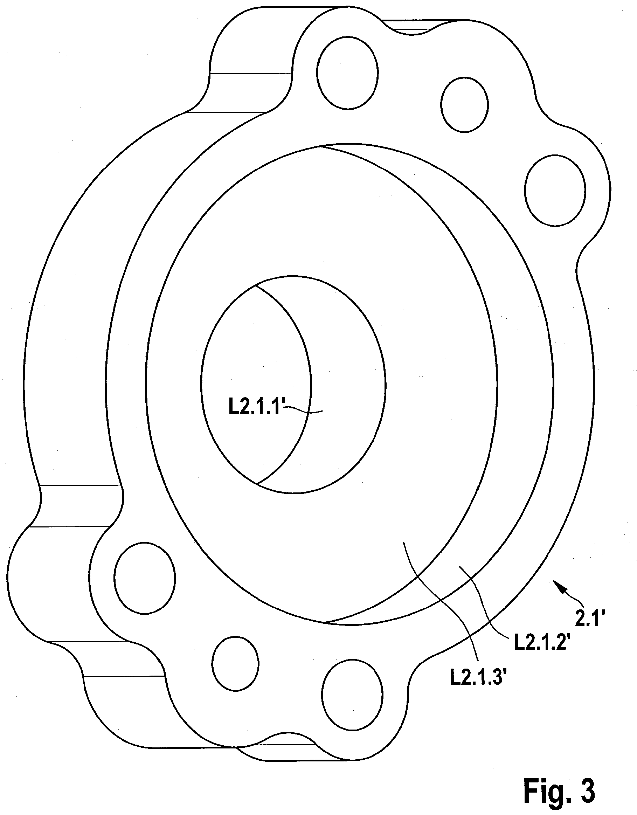

Bei dem hier dargestellten Planetengetriebe 2 sind die erste und die zweite Lagergegenfläche 2.2.1, 2.2.2 des Planetenträgers 2.2 auf der den Planetenrädern 2.3 abgewandten Seite angeordnet. Daher ist dieses Planetengetriebe 2 ein einseitig gelagertes Planetengetriebe 2. Die Erfindung ist aber nicht auf ein einseitig gelagertes Planetengetriebe 2 beschränkt, sondern auch für ein beidseitig gelagertes Planetengetriebe 2 verwendbar, bei dem die Planetenräder 2.3 zwischen der ersten und der zweiten Lagergegenfläche 2.2.1, 2.2.2 angeordnet sind. Die Erfindung ist auch nicht auf einen Verstellantrieb 1 mit einem Planetengetriebe 2 als letzte Getriebestufe beschränkt, sondern der erfindungsgemäße Lagerdeckel 2.1' (s. **Fig. 3**) eignet sich auch zum stirnseitigen Verschließen anderer Getriebestufen, beispielsweise eines Schneckengetriebes oder ähnlich.

**Fig. 3** zeigt einen Lagerdeckel 2.1'. Der Lagerdeckel 2.1' weist zur Aufnahme radialer Kräfte eine erste Lagerfläche L2.1.1' und eine zweite Lagerfläche L2.1.2' auf. Zur Aufnahme axialer Kräfte weist der Lagerdeckel 2.1' weiterhin eine dritte Lagerfläche 2.1.3' auf. Die Lagerflächen L2.1.1', L2.1.2', L2.1.3' sind einstückig mit dem Lagerdeckel 2.1' gefertigt.

Der Lagerdeckel 2.1' ersetzt in einem Verstellantrieb 1 wie beispielsweise dem Heckklappenantrieb 1 der **Fig. 1****,** **2** den dort dargestellten Lagerdeckel 2.1 sowie das erste Lagerbauteil 2.1.1 und das zweite Lagerbauteil 2.1.2. Bei eingebautem Lagerdeckel 2.1' in das dort dargestellte Planetengetriebe 2 gleiten die erste Lagergegenfläche 2.2.1 des Planetenträgers 2.2 entlang der ersten Lagerfläche L2.1.1' des Lagerdeckels 2.1' und die zweite Lagergegenfläche 2.2.2 des Planetenträgers 2.2 entlang der zweiten Lagerfläche L2.1.2' des erfindungsgemäßen Lagerdeckels 2.1'.

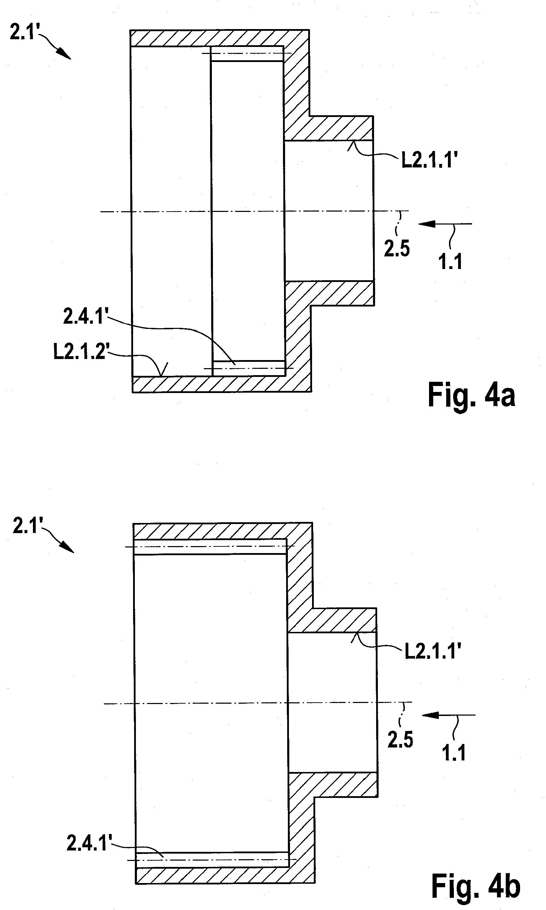

**Fig. 4** zeigt in den **Fig. 4 (a)** und **Fig. 4 (b)** weitere Ausführungsformen von Lagerdeckeln 2.1'. Im Gegensatz zu dem Lagerdeckel 2.1' der **Fig. 3** weisen die Lagerdeckel 2.1' der **Fig. 4 (a)** und **Fig. 4 (b)** jeweils eine Verzahnung 2.4.1' auf, die in den Lagerdeckel 2.1' integriert ist. Die Verzahnung 2.4.1' ist in beiden Ausführungsformen einstückig mit dem Lagerdeckel 2.1' gebildet. Dabei weist der Lagerdeckel 2.1' der **Fig. 4 (a)** im Gegensatz zum Lagerdeckel 2.1' der **Fig. 4 (b)** neben der ersten Lagerfläche L2.1.1' eine zweite Lagerfläche L2.1.2 auf. Die Lagerdeckel 2.1' **Fig. 3****,** **Fig. 4 (a)** und **Fig. 4 (b)** unterscheiden sich daher in der Anzahl und Anordnung der Lagerflächen L2.1.1', L2.1.2' und Verzahnung 2.4.1'.

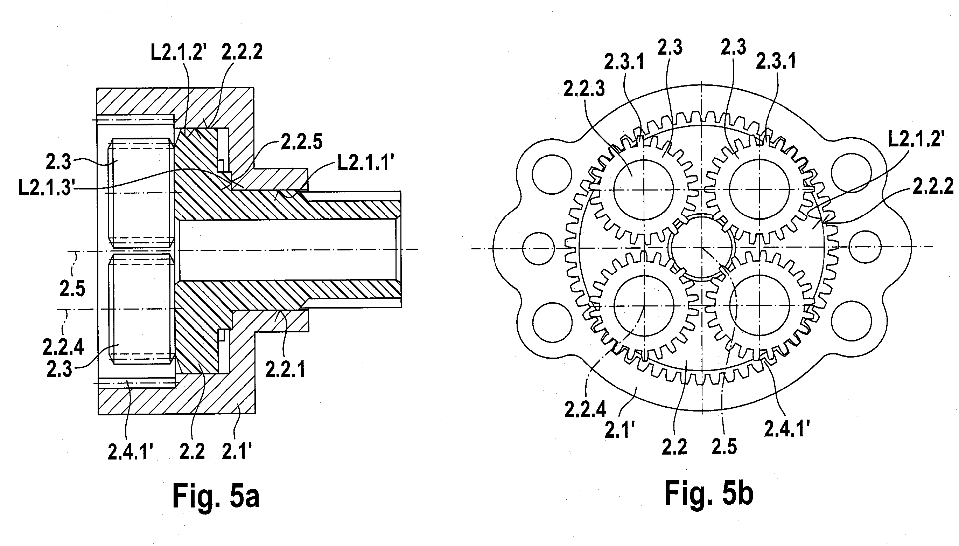

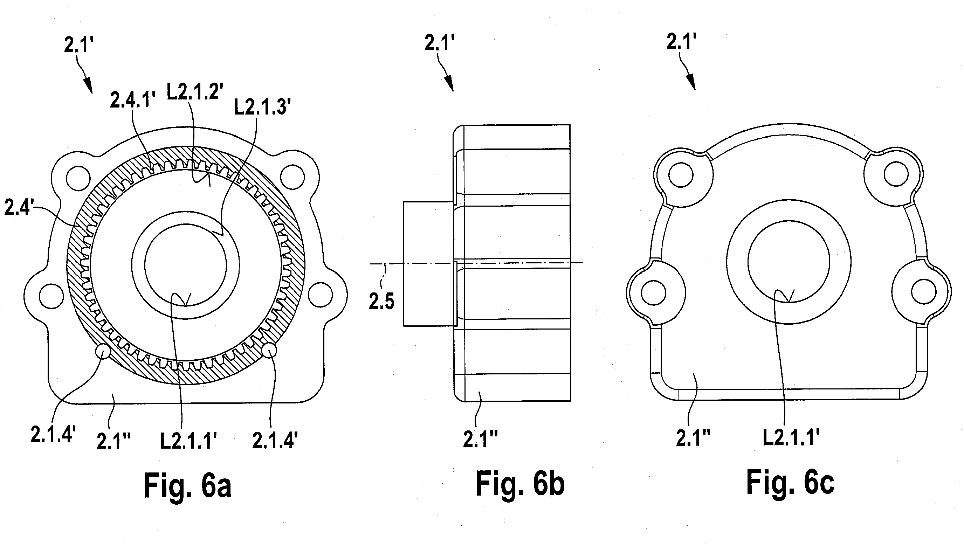

Der Lagerdeckel 2.1' der **Fig. 4** sowie die Lagerdeckel 2.1' der **Fig. 5** und **6** ersetzen in dem Verstellantrieb der **Fig. 1** und **2** außer dem Lagerdeckel 2.1 und dem ersten sowie zweiten Lagerbauteil 2.1.1, 2.1.2 weiterhin das Hohlrad 2.4. In den Lagerdeckel 2.1' sind daher insgesamt vier herkömmliche Getriebebauteile 2.1, 2.1.1, 2.1.2, 2.4 integriert. Jedoch ist die Anzahl der in den Lagerdeckel 2.1' integrierten Getriebebauteile nicht auf vier beschränkt, sondern es können in Abhängigkeit vom Anwendungsfall noch weitere Getriebebauteile, beispielsweise Lagerflächen und/oder Verzahnungen, in den Lagerdeckel 2.1' integriert sein.

**Fig. 5** zeigt eine weitere Ausführungsform eines Lagerdeckels 2.1', wobei ein Planetenträger 2.2 im Lagerdeckel 2.1' angeordnet ist, und wobei die **Fig. 5 (a)** den Lagerdeckel 2.1' in einer Seitenansicht und **Fig. 5 (b)** den Lagerdeckel 2.1' in einer Innenansicht zeigt. Der Lagerdeckel 2.1' weist eine erste Lagerfläche L2.1.1', eine zweite Lagerfläche L2.1.2', eine dritte Lagerfläche L2.1.3' sowie eine Verzahnung 2.4.1' auf. Die Lagerflächen L2.1.1', L2.1.2', L2.1.3' sowie die Verzahnung 2.4.1' sind einstückig mit dem Lagerdeckel 2.1' gefertigt. Der Lagerdeckel 2.1' erstreckt sich konzentrisch um die Drehachse 2.5. Der Planetenträger 2.2 weist eine erste Lagergegenfläche 2.2.1, eine zweite Lagergegenfläche 2.2.2 und eine dritte Lagergegenfläche 2.2.5 auf, und erstreckt sich ebenfalls konzentrisch um die Drehachse 2.5, so dass er ist in dem Lagerdeckel 2.1' so angeordnet ist, dass die erste Lagergegenfläche 2.2.1 an der ersten Lagerfläche L2.1.1', die zweite Lagergegenfläche 2.2.2 an der zweiten Lagerfläche L2.1.2 und die dritte Lagergegenfläche 2.2.5 an der dritten Lagerfläche L2.1.3' entlang gleitet, wenn sich der Planetenträger 2.2 um die Drehachse 2.5 dreht.

Weiterhin umfasst der Planetenträger 2.2 vier Lagerbolzen 2.2.3, an denen jeweils ein Planetenrad 2.3 angeordnet ist. Die Lagerbolzen 2.2.3 erstrecken sich entlang einer Radachse 2.2.4, um die die Planetenräder 2.3 drehbar sind. Die Planetenräder 2.3 weisen jeweils eine Außenverzahnung 2.3.1 auf, die in der **Fig. 5 (a)** der Übersichtlichkeit halber nicht gezeigt ist.

Die Außenverzahnung 2.3.1 der Planetenräder 2.3 ist in Eingriff mit der Verzahnung 2.4.1' des Lagerdeckels 2.1'. Beim Drehen der Planetenräder 2.3 um ihre Radachse 2.2.4 rollen sich die Planetenräder 2.3 daher entlang der Verzahnung 2.4.1' des Lagerdeckels 2.1' ab, wobei sich der Planetenträger 2.2 um die Drehachse 2.5 dreht. Die Verzahnung 2.4.1 ersetzt in dem hier gezeigten Beispiel daher das Hohlrad 2.4 des Planetengetriebes 2.

**Fig. 6** zeigt eine weitere Ausführungsform eines erfindungsgemäßen Lagerdeckels 2.1', wobei die **Fig. 6 (a)** den Lagerdeckel 2.1' in einer Innenansicht, die **Fig. 6 (b)** den Lagerdeckel 2.1' in einer Seitenansicht, und **Fig. 6 (c)** den Lagerdeckel 2.1' in einer Draufsicht zeigt. Der Lagerdeckel 2.1' weist einen aus einem Kunststoff gefertigten Grundkörper 2.1" auf. Außer der ersten Lagerfläche L2.1.1' sind auch die zweite Lagerfläche L2.1.2' und dritte Lagerfläche L2.1.3' einstückig und aus demselben Kunststoff mit dem Grundkörper 2.1" gefertigt.

Außerdem umfasst der Lagerdeckel 2.1' ein Zahnrad 2.4', welches in den Grundkörper 2.1" eingepresst oder eingespritzt ist. Das Zahnrad 2.4' ist aus einem Metall gefertigt, weist als Verzahnung 2.4.1' eine Innenverzahnung auf, und ist konzentrisch um die Drehachse 2.5 angeordnet. Das Zahnrad 2.4' ist hier daher als ein ringförmiger Einsatz ausgebildet. In dem hier gezeigten Beispiel bildet es das Hohlrad 2.4 des Planetengetriebes 2.

Um auf das Zahnrad 2.4' wirkende Drehmomente auch über den Grundkörper 2.1" ausreichend abzustützen, sind zwischen dem Zahnrad 2.4' und dem Grundkörper 2.1" hier beispielhaft zwei Stifte als Formschlussmittel 2.1.4' angeordnet. Bei eingespritztem Zahnrad 2.4' wird als Formschlussmittel 2.1.4' bevorzugt eine Außenverzahnung am Zahnrad 2.4' vorgesehen, die so ausgebildet ist, dass sie die auf das Zahnrad 2.4' wirkenden Drehmomente abstützen kann.

Durch das zweiteilige Design dieser Ausführungsform des Lagerdeckels 2.1' ist im Vergleich zur separaten Fertigung der entsprechenden Getriebebauteile 2.1, 2.2, 2.3, 2.4 die Toleranzkette erheblich reduziert. Außerdem ist das Zahnrad 2.4' aufgrund seines ringförmigen Gestalt sehr genau im Lagerdeckel 2.1' zentrierbar. Dadurch ist das Laufverhalten des Verstellantriebs mit erfindungsgemäßem Lagerdeckel 2.1' im Vergleich zu einem herkömmlichen Verstellantrieb verbessert und die durch den Verstellantrieb verursachten Laufgeräusche sind reduziert.

Der erfindungsgemäße Lagerdeckel 2.1' ist mit seinen Lagerflächen L2.1.1', L2.1.2', L2.1.3' und/oder der Verzahnung 2.4.1' in einem einzigen Herstellungsprozess, beispielsweise durch Sintern, einteilig herstellbar. Oder anstelle der Verzahnung 2.4.1' ist ein aus einem anderen Material gefertigtes Zahnrad 2.4' in den Grundkörper 2.1" des Lagerdeckels 2.1' einsetzbar. Aufgrund der geringeren Bauteilezahl sind sowohl die Herstellung des Lagerdeckels 2.1' als auch die Lagerhaltung sowie die Montage eines Verstellantriebs 1 mit erfindungsgemäßem Lagerdeckel 2.1' einfach und vergleichsweise kostengünstig. Außerdem werden funktionsrelevante Toleranzen des Lagerdeckels 2.1' bereits beim Herstellungsprozess berücksichtigt und es ist keine Nacharbeit erforderlich. Zudem ist der Werkzeugaufwand sehr gering, und es werden auch keine weiteren Werkzeuge für die Herstellung der Lagerbauteile 2.1.1, 2.1.2 benötigt.

Der Lagerdeckel 2.1' eignet sich für viele verschiedene Verstellantriebe 1 zum Verstellen von Komponenten, insbesondere eines Fahrzeugs, beispielsweise für einen Heckklappenantrieb, zum Verstellen eines Schiebedachs oder zur Höhenverstellung oder Neigungsverstellung eines Sitzes.

## Patentansprüche

1. **Verstellantrieb (1), insbesondere Heckklappenantrieb, mit einem Getriebe (2), welches stirnseitig mit einem Lagerdeckel (2.1') verschlossen ist, wobei der Lagerdeckel (2.1') zum stirnseitigen Verschließen des als Planetengetriebe (2) ausgebildeten Getriebes (2) vorgesehen ist,** und der **Lagerdeckel (2.1')** eine erste Lagerfläche (L2.1.1', L2.1.2', L2.1.3') umfasst, die zum Lagern eines Getriebebauteils (2.2.1, 2.2.2) des Getriebes (2) vorgesehen, und mit dem Lagerdeckel (2.1') einstückig gefertigt ist, wobei in den Lagerdeckel (2.1') ein Getriebebauteil (2.4') integriert ist, wobei das Getriebebauteil (2.4') ein Zahnrad mit einer Verzahnung (2.4.1') ist, wobei der Lagerdeckel (2.1') einen Grundkörper (2.1") umfasst,
wobei der Grundkörper (2.1") aus einem ersten Werkstoff und das Zahnrad (2.4') aus einem anderen Werkstoff gefertigt sind, wobei die erste Lagerfläche (L2.1.1') und eine zweite Lagerfläche (L2.1.2') zur Aufnahme von Radialkräften vorgesehen ist, und der Lagerdeckel (2.1') eine dritte Lagerfläche (L2.1.3') zur Aufnahme von Axialkräften aufweist, wobei die erste Lagerfläche (L2.1.1') und die zweite Lagerfläche (L2.1.2') und die dritte Lagerfläche (L2.1.3') einstückig und aus demselben Kunststoff mit dem Grundkörper (2.1") gefertigt ist, und das Planetengetriebe (2) einen Planetenträger (2.2) mit einer ersten Lagergegenfläche (2.2.1) umfasst, die sich an der ersten Lagerfläche (2.1.1') des Lagerdeckels (2.1') abstützt, und der Planetenträger (2.2) eine zweite Lagergegenfläche (2.2.2) umfasst, wobei sich die zweite Lagergegenfläche (2.2.2) an der zweiten Lagerfläche (L2.1.2') abstützt, und der Planetenträger (2.2) eine dritte Lagergegenfläche (2.2.3) umfasst, die sich an der dritten Lagerfläche (L2.1.3') abstützt; **wobei die erste Lagergegenfläche (2.2.1) entlang der ersten Lagerfläche (L2.1.1'), und die zweite Lagergegenfläche (2.2.2) entlang der zweiten Lagerfläche (L2.1.2'), und die dritte Lagergegenfläche (2.2.5) entlang der dritten Lagerfläche (L2.1.3') gleitet, wenn sich der Planetenträger (2.2) um eine Drehachse (2.5) des Planetenträgers (2.2) dreht, wobei die erste Lagerfläche (L2.1.1') einen kleineren Radius aufweist, als die zweite Lagerfläche (L2.1.2').**

2. **Verstellantrieb (1)** nach Anspruch 1, **dadurch gekennzeichnet, dass** er ein Funktionsbauteil umfasst, insbesondere einen Sensor.

3. **Verstellantrieb (1)** nach einem der Ansprüche 1 oder 2, **dadurch gekennzeichnet, dass** der Grundkörper (2.1") aus einem Kunststoff und zumindest das Zahnrad (2.4') aus einem Metall gefertigt sind.

4. **Verstellantrieb (1)** nach einem der Ansprüche 1 bis 3, **dadurch gekennzeichnet, dass** er zumindest ein Formschlussmittel (2.1.4') umfasst, welches das Zahnrad (2.4') gegen den Grundkörper (2.1") abstützt.

5. Verstellantrieb (1) nach einem der Ansprüche **1 bis 4, dadurch gekennzeichnet, dass** der Planetenträger (2.2) zumindest ein Planetenrad (2.3) mit einer Planetenradverzahnung (2.3.1), und der Lagerdeckel (2.1') eine Hohlradverzahnung (2.4.1') umfasst, wobei die Planetenradverzahnung (2.3.1) mit der Hohlradverzahnung (2.4.1') in Eingriff ist.

## Claims

1. Adjusting drive (1), in particular tailgate drive, having a gear mechanism (2) which is closed on the end side by way of a bearing cover (2.1'), the bearing cover (2.1') being provided for the end-side closure of the gear mechanism (2) which is configured as a planetary gear mechanism (2), and the bearing cover (2.1') comprising a first bearing face (L2.1.1', L2.1.2', L2.1.3') which is provided for mounting a gear mechanism component (2.2.1, 2.2.2) of the gear mechanism (2) and is manufactured in one piece with the bearing cover (2.1'), a gear mechanism component (2.4') being integrated into the bearing cover (2.1'), the gear mechanism component (2.4') being a gearwheel with a toothing system (2.4.1'), the bearing cover (2.1') comprising a main body (2.1"),
the main body (2.1") being manufactured from a first material and the gearwheel (2.4') being manufactured from another material, the first bearing face (L2.1.1') and a second bearing face (L2.1.2') being provided to absorb radial forces, and the bearing cover (2.1') having a third bearing face (L2.1.3') for absorbing axial forces, the first bearing face (L2.1.1'), the second bearing face (L2.1.2') and the third bearing face (L2.1.3') being manufactured in one piece and from the same plastic with the main body (2.1"), and the planetary gear mechanism (2) comprising a planetary carrier (2.2) with a first bearing counterface (2.2.1) which is supported on the first bearing face (2.1.1') of the bearing cover (2.1'), and the planetary carrier (2.2) comprising a second bearing counterface (2.2.2), the second bearing counterface (2.2.2) being supported on the second bearing face (L2.1.2'), and the planetary carrier (2.2) comprising a third bearing counterface (2.2.3) which is supported on the third bearing face (L2.1.3'); the first bearing counterface (2.2.1) sliding along the first bearing face (L2.1.1'), the second bearing counterface (2.2.2) sliding along the second bearing face (L2.1.2'), and the third bearing counterface (2.2.5) sliding along the third bearing face (L2.1.3') when the planetary carrier (2.2) rotates about a rotational axis (2.5) of the planetary carrier (2.2), the first bearing face (L2.1.1') having a smaller radius than the second bearing face (L2.1.2').

2. Adjusting drive (1) according to Claim 1, **characterized in that** it comprises a functional component, in particular a sensor.

3. Adjusting drive (1) according to either of Claims 1 and 2, **characterized in that** the main body (2.1") is manufactured from a plastic, and at least the gearwheel (2.4') is manufactured from a metal.

4. Adjusting drive (1) according to one of Claims 1 to 3, **characterized in that** it comprises at least one positively locking means (2.1.4') which supports the gearwheel (2.4') with respect to the main body (2.1").

5. Adjusting drive (1) according to one of Claims 1 to 4, **characterized in that** the planetary carrier (2.2) comprises at least one planetary gear (2.3) with a planetary gear toothing system (2.3.1), and the bearing cover (2.1') comprises an internal gear toothing system (2.4.1'), the planetary gear toothing system (2.3.1) being in engagement with the internal gear toothing system (2.4.1').

## Revendications

1. Entraînement de déplacement (1), en particulier entraînement de hayon, avec une transmission (2), qui est fermée côté frontal par un chapeau de palier (2.1'), dans lequel le chapeau de palier (2.1') est prévu pour la fermeture côté frontal de la transmission (2) formée par un engrenage planétaire (2), et le chapeau de palier (2.1') comprend une première face de palier (L2.1.1', L2.1.2', L2.1.3'), qui est prévue pour l'appui d'un composant de transmission (2.2.1, 2.2.2) de la transmission (2), et qui est fabriquée d'une seule pièce avec le chapeau de palier (2.1'), dans lequel un composant de transmission (2.4') est intégré dans le chapeau de palier (2.1'), dans lequel le composant de transmission (2.4') est une roue dentée avec une denture (2.4.1'), dans lequel le chapeau de palier (2.1') comprend un corps de base (2.1"), dans lequel le corps de base (2.1") est fabriqué en un premier matériau et la roue dentée (2.4') est fabriquée en un autre matériau, dans lequel la première face de palier (L2.1.1') et une deuxième face de palier (L2.1.2') est prévue pour la reprise de forces radiales, et le chapeau de palier (2.1') présente une troisième face de palier (L2.1.3') destinée à reprendre des forces axiales, dans lequel la première face de palier (L2.1.1') et la deuxième face de palier (L2.1.2') et la troisième face de palier (L2.1.3') sont fabriquées d'une seule pièce et avec la même matière plastique que le corps de base (2.1"), et l'engrenage planétaire (2) comprend un porte-satellites (2.2) avec une première face de palier opposée (2.2.1), qui s'appuie sur la première face de palier (2.1.1') du chapeau de palier (2.1'), et le porte-satellites (2.2) comprend une deuxième face de palier opposée (2.2.2), dans lequel la deuxième face de palier opposée (2.2.2) s'appuie sur la deuxième face de palier (L2.1.2'), et le porte-satellites (2.2) comprend une troisième face de palier opposée (2.2.3), qui s'appuie sur la troisième face de palier (L2.1.3'), dans lequel la première face de palier opposée (2.2.1) glisse le long de la première face de palier (L2.1.1'), et la deuxième face de palier opposée (2.2.2) glisse le long de la deuxième face de palier opposée (L2.1.2'), et la troisième face de palier opposée (2.2.5) glisse le long de la troisième face de palier (L2.1.3'), lorsque le porte-satellites (2.2) tourne autour d'un axe de rotation (2.5) du porte-satellites (2.2), dans lequel la première face de palier (L2.1.1') présente un plus petit rayon que la deuxième face de palier (L2.1.2').

2. Entraînement de déplacement (1) selon la revendication 1, **caractérisé en ce qu'**il comprend un composant fonctionnel, en particulier un capteur.

3. Entraînement de déplacement (1) selon une des revendications 1 ou 2, **caractérisé en ce que** le corps de base (2.1") est fabriqué en une matière plastique et au moins la roue dentée (2.4') est fabriquée en un métal.

4. Entraînement de déplacement (1) selon l'une quelconque des revendications 1 à 3, **caractérisé en ce qu'**il comprend au moins un moyen d'assemblage par emboîtement (2.1.4'), qui appuie la roue dentée (2.4') contre le corps de base (2.1").

5. Entraînement de déplacement (1) selon l'une quelconque des revendications 1 à 4, **caractérisé en ce que** le porte-satellites (2.2) comprend au moins une roue planétaire (2.3) avec une denture de roue planétaire (2.3.1), et le chapeau de palier (2.1') comprend une denture de couronne (2.4.1'), dans lequel la denture de roue planétaire (2.3.1) est en prise avec la denture de couronne (2.4.1').
